# EUROPÄISCHE PATENTANMELDUNG

(11) **EP 1 362 506 A1**
(43) Veröffentlichungstag der Anmeldung: **19.11.2003**
(21) Anmeldenummer: 03009206.8
(22) Anmeldetag: 23.04.2003
(51) Int. Cl.: A01D 89/00

(54) **Gutaufnahmevorrichtung und Höhenführungsvorrichtung**

(30) Priorität: 16.05.2002 DE 10221735
(71) Anmelder: DEERE & COMPANY, Moline, Illinois 61265-8098 (US)
(72) Erfinder: Derscheid, Daniel Eric, 70100 Gray (FR)
(74) Vertreter: Magin, Ludwig Bernhard

(57) **Zusammenfassung**

1. Gutaufnahmevorrichtung und Höhenführungsvorrichtung
2.1. In bekannter Weise sind die Räder einer Gutaufnahmevorrichtung mittels eines vertikalen und eines horizontalen Lagers kardanisch aufgehängt, damit sie aus einer seitlichen Stellung in eine Stellung hinter der Gutaufnahmevorrichtung bringbar sind und somit während des Transports auf der Straße die Transportbreite nicht erhöhen. Diese Lösung bedeutet einen erheblichen baulichen Aufwand.
2.2. Es wird eine Höhenführungsvorrichtung vorgeschlagen, bei der einerseits ein Gleitschuh (46) und andererseits ein Rad (44) an einem Schwenkarmzusammenbau angebracht sind, die zwischen dem Gleitschuh (46) und dem Rad (44) um eine horizontale Schwenkwelle (48) schwenkbar ist. Der Gleitschuh (46) kann sich unter die Gutaufnahmevorrichtung (22) erstrecken und vergrößert daher nicht deren Breite.
2.3. Gutaufnahmevorrichtungen (22) und Höhenführungsvorrichtungen (28) werden an Landmaschinen (10) verwendet.

## Beschreibung

Die Erfindung betrifft eine Gutaufnahmevorrichtung mit einer Höhenführungsvorrichtung mit einem Schwenkarmzusammenbau, der am rückwärtigen Bereich der Gutaufnahmevorrichtung vertikal schwenkbar gelagert ist, und eine Höhenführungsvorrichtung.

Die FR-A1-2 766 322 offenbart eine Erntegutaufnahmevorrichtung mit Stützrädern, die jeweils mittels eines Schwenkarmzusammenbaus an einer Seitenwand angebracht sind. Der Schwenkarmzusammenbau ist mittels eines vertikalen und eines horizontalen Lagers gehalten und kann sowohl vertikal wie auch horizontal derart geschwenkt werden, dass das Stützrad in einen Freiraum hinter der Erntegutaufnahmevorrichtung schwenkbar ist, um deren Transportbreite zu reduzieren.

Die WO-A1-98/17096 lehrt den Anschluss eines Stützrades an jeder Seite einer sog. Pick-Up mittels eines Schwenkarmzusammenbaus, der in der Form eines auf dem Kopf stehenden "U" ausgebildet ist. Die Größe, Form und Anordnung des Schwenkarmzusammenbaus ist so gewählt, dass zwischen dem Rad und der Pick-Up ein großer Freiraum besteht, der verhindert, dass sich Erntegut dort festsetzt.

Die EP-A-383 121 und die EP 386 430 zeigen jeweils eine landwirtschaftliche Erntemaschine mit einer Tasträdervorrichtung, wobei auf jeder Seite einer Gutaufnahmevorrichtung mehrere in Fahrtrichtung beabstandete Tasträder an einem Schwenkarmzusammenbau in Tandem- oder Doppelschwingenbauweise an dieser angebracht sind.

Das der Erfindung zugrunde liegende Problem wird darin gesehen, dass die Tasträder beim Transport auf öffentlichen Straßen und großer Breite der Gutaufnahmevorrichtung entweder mit großem technischen Aufwand verschwenkt oder demontiert werden müßten.

Dieses Problem wird erfindungsgemäß durch die Lehre des Patentanspruchs 1 bzw. 11 gelöst, wobei in den weiteren Patentansprüchen Merkmale aufgeführt sind, die die Lösung in vorteilhafter Weise weiterentwickeln.

Auf diese Weise kann sich der Schwenkarmzusammenbau innerhalb der Wirkbreite der Gutaufnahmevorrichtung befinden und auf dem Boden abstützen, weil der Gleitschuh zwischen den Aufnehmern der Gutaufnahmevorrichtung oder zwischen diesen und dem Boden Platz hat. Der Gleitschuh kann sich folglich auch bis in den Aufnahmebereich der Gutaufnahmevorrichtung erstrecken und somit reagieren, bevor diese auf ein Hindernis oder eine Bodenunebenheit auftrifft. Da sich der Schwenkarmzusammenbau an dem dem Gleitschuh gegenüberliegenden Ende auf dem Rad abstützt und somit einen Hebelarm um ein dazwischen liegendes Lager bildet, wird der Hubweg reduziert.

Wenn der Gleitschuh schmaler ist als der Abstand zwischen den Aufnehmern der Gutaufnahmevorrichtung, kann er sich zwischen diesen erstrecken, behindert sie nicht und kann nahezu so hoch ausgebildet werden, wie die Aufnehmer über Abstreifbleche der Gutaufnahmevorrichtung hinausragen.

Ein plattenförmiger Gleitschuh kann aufgrund seiner flachen Ausbildung unterhalb der Aufnehmer angeordnet und somit wesentlich breiter ausgebildet werden, was zu einem geringen Bodendruck führt. Zwischen den Aufnehmern können vertikale Versteifungsstege und -rippen vorgesehen werden, die den Gleitschuh gegen Verbiegung schützen.

Die Lage des Schwenkpunktes des Schwenkarmzusammenbaus an dem Rad im Wesentlichen unterhalb der Stelle, an der die Gutaufnahmevorrichtung an einer Rundballenpresse oder dergleichen Ernte- oder Erntebergungsmaschine angebracht ist, führt zu einer ausreichenden Sensibilität beim Auftreffen auf Bodenunebenheiten einerseits, und andererseits werden zu heftige Reaktionen vermieden.

Wenn mehrere, z. B. drei bis zehn, Gleitschuhe vorgesehen werden, wird einerseits der Bodendruck jedes einzelnen Gleitschuhs reduziert und andererseits wird die Wahrscheinlichkeit verringert, dass auf ein Hindernis nicht reagiert wird. Mehrere Gleitschuhe können auch mittels einer Art Waage oder Ausgleichsvorrichtung an den Schwenkarmzusammenbau angeschlossen werden, so dass der Schwenkarmzusammenbau nur dann betätigt wird, wenn ein Hindernis an z. B. zwei nebeneinander liegenden Gleitschuhen erkannt wird. Auf diese Weise wird auch vermieden, dass sich die Gutaufnahmevorrichtung absenkt, wenn der Gleitschuh z. B. in eine Furche gerät.

Zwar können die Gleitschuhe und die Räder und eventuell sogar die Räder der Maschine, an die die Gutaufnahmevorrichtung angebracht wird, in einer Flucht angeordnet werden; dies ist aber nicht zwingend. Vielmehr kann eine versetzte Anordnung der Gleitschuhe und Räder dazu führen, dass z. B. in dem Fall, dass ein Gleitschuh in eine Furche gerät, das seitlich der Furche abrollende Rad noch eine Mindestabstützung erbringt. Des weiteren kann auf diese Weise auf die räumlichen Anbauverhältnisse Rücksicht genommen werden. Eine hierzu vorgesehene Schwenkwelle erstreckt sich soweit über die Gutaufnahmevorrichtung, wie dies erforderlich ist, um alle Gleitschuhe und Räder aufzunehmen.

Eine elastische Ausbildung des Schwenkarmzusammenbaus, z. B. dadurch, dass er aus einem elastischen Material gebildet ist, oder dadurch, dass er aus mehreren elastisch miteinander verbundenen Teilen oder Armen zusammengesetzt ist, hat den Vorteil, dass Lastspitzen insbesondere bei hohen Auftreffgeschwindigkeiten vermieden werden. Andererseits können Lastspitzen auch dadurch vermieden werden, dass zwischen dem Gleitschuh bzw. dem Rad und dem Schwenkarmzusammenbau eine irgendwie geartete Feder vorgesehen ist.

Runde Kanten an dem Gleitschuh reduzieren die Gefahr, dass sich Erntegut oder andere Gegenstände beim Gleiten über den Boden an dem Gleitschuh verfangen und sich dort aufbaut. Insbesondere wird der Reibwiderstand beim Gleiten über den Boden verringert.

Eine Vorspannung des Schwenkarmzusammenbaus gegenüber der Gutaufnahmevorrichtung derart, dass der Gleitschuh an der Unterseite der Gutaufnahmevorrichtung anliegt, hat den Vorteil, dass sich der Gleitschuh beim Absenken der Gutaufnahmevorrichtung nicht in den Boden eingräbt und dabei möglicherweise beschädigt wird; vielmehr wird dabei das Rad nach unten gedrückt, so dass dieses beim Absenken der Gutaufnahmevorrichtung zuerst den Boden berührt und auf diesem abrollt, was unproblematisch ist. Wirkt in einer anderen Ausführungsform die Vorspannung derart, dass das Rad nach oben geschwenkt wird, kann dies Vorteile beim Transport auf der Straße haben, weil bei hochgeschwenkter Gutaufnahmevorrichtung das Rad tiefer zu liegen kommt als der Gleitschuh. Insgesamt wird die Vorspannung dort und so angewendet, wo und wie es sinnvoll ist, um Schäden infolge einer unkontrollierten Bewegung des Schwenkarmzusammenbaus zu vermeiden.

Mittels wenigstens eines Anschlags in der einen, der anderen oder beiden Richtungen wird verhindert, dass der Schwenkarmzusammenbau mit dem Gleitschuh und dem Rad zu weit von der Gutaufnahmevorrichtung wegschwenkt und dann soweit übersteht, dass er hindern könnte oder beim Transport oder beim Betrieb hängenbleibt.

Höhenführungsvorrichtungen mit den genannten Merkmalen können auch als selbständige Einheit gehandelt und nachträglich an bestehende Gutaufnahmevorrichtungen angebaut werden. Insbesondere bei Rundballenpressen, Rechteckballenpressen, Ladewagen, Feldhäckslern, Schwadaufnehmern und dergleichen ist es dann möglich, Gutaufnahmevorrichtungen zu benutzen, deren mögliche Aufnahmebreite im Wesentlichen der maximal zulässigen Transportbreite auf der Straße entspricht.

In der Zeichnung ist ein nachfolgend näher beschriebenes Ausführungsbeispiel der Erfindung dargestellt. Es zeigt:
- Fig. 1: eine Landmaschine mit einer erfindungsgemäßen Gutaufnahmevorrichtung bzw. Höhenführungsvorrichtung in Seitenansicht und schematischer Darstellung,
- Fig. 2: die Gutaufnahmevorrichtung nach Figur 1 in Vorderansicht, und
- Fig. 3: die Höhenführungsvorrichtung und die Gutaufnahmevorrichtung nach Figur 1 in vergrößerter Darstellung und in Seitenansicht.

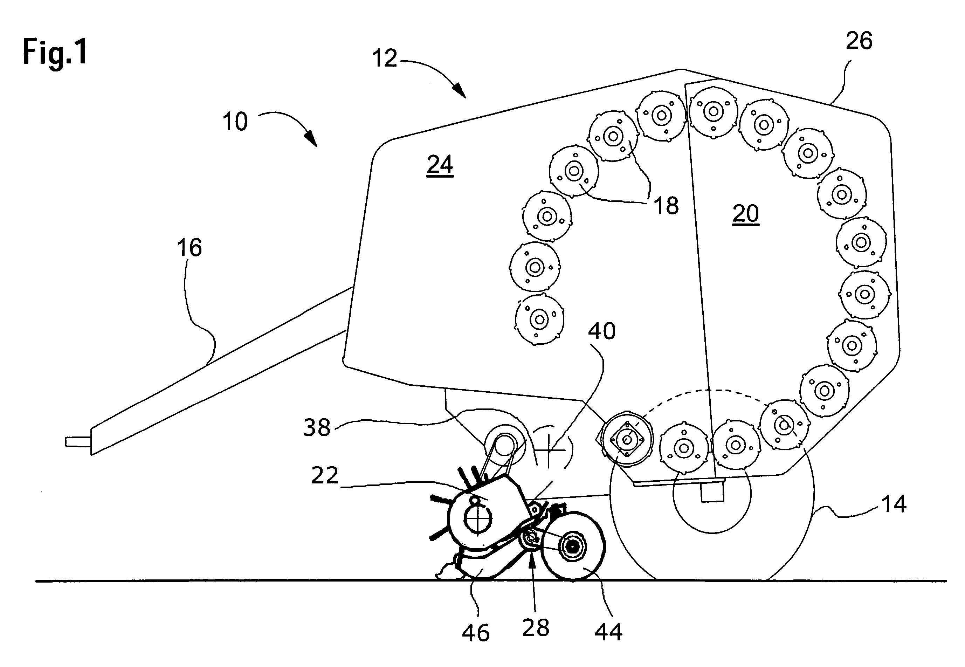

Figur 1 zeigt eine Landmaschine 10 mit einem Rahmen 12, der sich über Tragräder 14 auf dem Boden abstützt und mittels einer Deichsel 16 an ein Zugfahrzeug anschließbar ist. Pressrollen 18 umgeben einen Pressraum 20, in dem Pressgut zu einem Ballen verdichtet werden kann, das von einer Gutaufnahmevorrichtung 22 vom Boden aufgenommen wird. Der Pressraum 20 erstreckt sich durch einen vorderen und festen Gehäuseteil 24 und einen rückwärtigen Gehäuseteil 26, der zum Auswerfen eines Rundballens anhebbar ist. An jeder Seite der Gutaufnahmevorrichtung 22 befindet sich eine Höhenführungsvorrichtung 28, mit der die Gutaufnahmevorrichtung 22 in einer bestimmten Höhe über den Boden geführt wird.

Die soweit beschriebene Landmaschine 10 entspricht einer Rundballenpresse herkömmlicher Bauweise; allerdings ist die Verwendung der erfindungsgemäßen Höhenführungsvorrichtung 28 weder auf eine Rundballenpresse der dargestellten Art noch auf eine Rundballenpresse überhaupt beschränkt. Vielmehr kommen auch andere Landmaschinen, z. B. eine andere Presse, ein Ladewagen, ein Feldhäcksler, Mähdrescher und dergleichen in Frage.

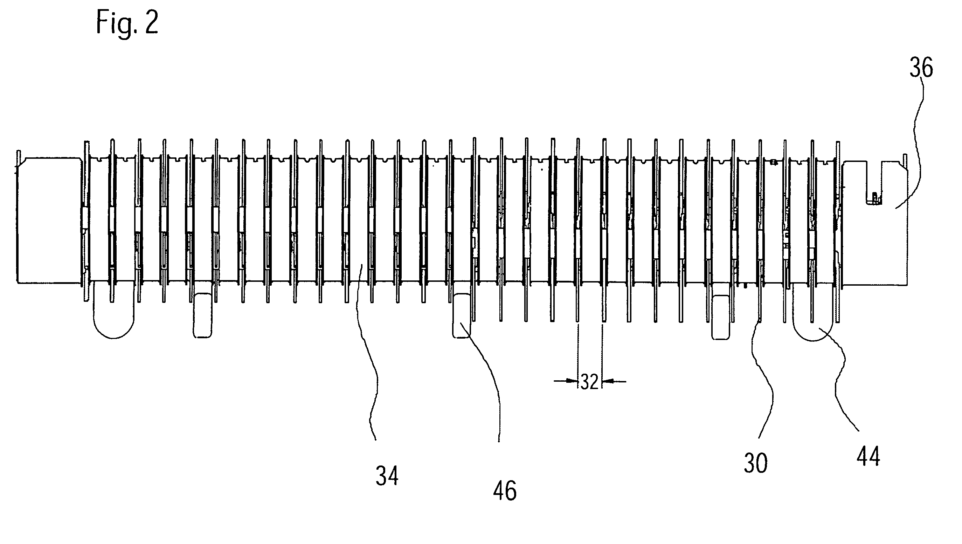

Die Gutaufnahmevorrichtung 22 kann sowohl eine Pick-Up als auch ein Schneidwerk, ein Maisgebiss oder dergleichen sein und kann sich über die für den Transport auf der Straße maximal zulässige Breite erstrecken. Wie es insbesondere aus Figur 2 hervorgeht, enthält die Gutaufnahmevorrichtung 22 in horizontal beabstandeten Reihen vertikal umlaufende Zinken 30, die zwischen sich einen Abstand 32 belassen, der von Abstreifblechen 34 überbrückt wird. Die Zinken 30 und die Abstreifbleche 34 werden von einem Rahmen 36 getragen, an dessen Rückseite sich Wände 38 vertikal erstrecken und in einem Lager 40 an dem Rahmen 12 der Landmaschine 10 vertikal schwenkbar aufgenommen werden. Das Lager 40 befindet sich oberhalb und rückwärtig des Rahmens 36, aber noch vor den Tragrädern 14. Die Gutaufnahmevorrichtung 22 kann mittels nicht gezeigter Betätigungsvorrichtungen, z. B. Gestänge, Seile, Hydraulikmotoren, etc., in der Höhe verstellt werden, um so eine obere Transportstellung einzunehmen, oder zur Gutaufnahme auf dem Boden entlang zu gleiten. In der unteren Gutaufnahmestellung kann die Gutaufnahmevorrichtung 22 gemäß der Oberfläche des Bodens schwimmen. Im übrigen handelt es sich um eine Gutaufnahmevorrichtung 22 herkömmlicher Bauart.

Die Höhenführungsvorrichtung 28 enthält einen Schwenkarmzusammenbau 42, Räder 44, Gleitschuhe 46, eine Schwenkwelle 48 und Lager 50.

In dem speziellen Ausführungsbeispiel ist die Höhenführungsvorrichtung 22 als ein Zusammenbau ausgebildet, der an die Unterseite der Gutaufnahmevorrichtung 22 angebaut wird und sich fast bzw. im Wesentlichen über deren gesamte Breite erstreckt. Allerdings wäre es auch möglich, diese mit jeweils nur einer Komponente (Schwenkarmzusammenbau 42, Rad 44, Gleitschuh 46, Schwenkwelle 48, Lager 50) auszubilden und den dann schmalen Zusammenbau an einer Stelle der Gutaufnahmevorrichtung 22 vorzusehen.

Während in dem speziellen Ausführungsbeispiel zwei Räder 44 und drei Gleitschuhe 46 vorgesehen sind, würden grundsätzlich auch ein Rad 44 und ein Gleitschuh 46 ausreichen. Andererseits könnten auch mehr als zwei Räder 44 und drei Gleitschuhe 46 vorgesehen sein, soweit dies noch praktikabel und technisch sinnvoll ist.

Jedes Rad 44 weist verglichen mit den Tragrädern 14 einen relativ kleinen Durchmesser auf und dient der Abstützung des Schwenkarmzusammenbaus 42 auf dem Boden, wenn die Gleitschuhe 46 auf ein Hindernis treffen. Die Räder 44 befinden sich rückwärtig der Schwenkwelle 48 bzw. mit Blick auf Figur 1 rechts von ihr. Jedes Rad 44 ist drehbar in einem Endbereich eines Arms 52 aufgenommen, dessen anderer Endbereich radial zu der Schwenkwelle 48 gehalten ist. Die Räder 44 können sowohl starr als auch luftbereift sein. Die Arme 52 können in einer einfachen Form drehfest auf der Schwenkwelle 48 gehalten werden. In der dargestellten Ausführungsform sind sie jedoch auf ihr schwenkbar gelagert.

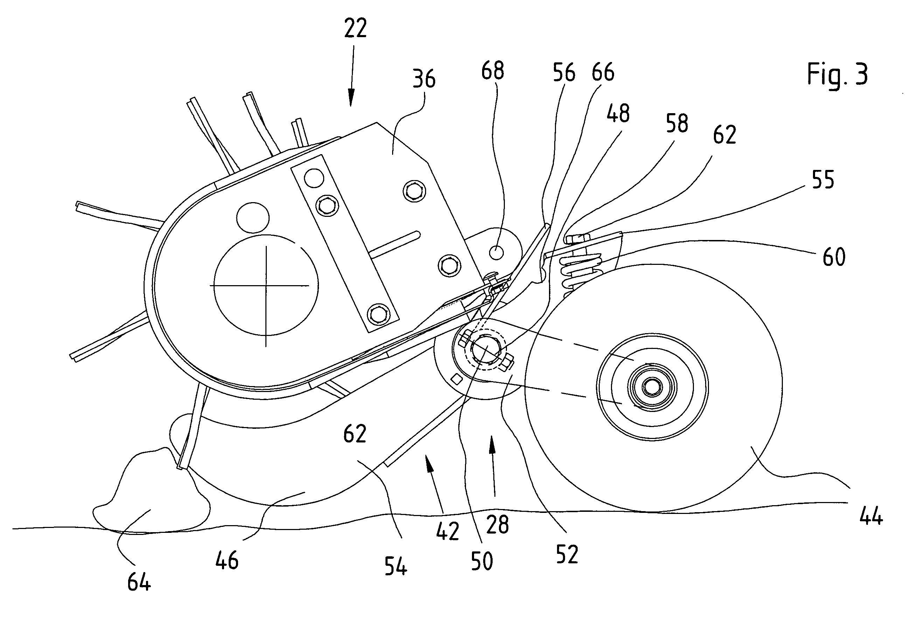

Die Gleitschuhe 46 verlaufen ebenfalls radial zu der Schwenkwelle 48 und sind mit dieser drehfest verbunden. Wenn auch die Gleitschuhe 46 nach Figur 3 direkt mit der Schwenkwelle 48 verbunden dargestellt sind, so geht die Beschreibung im nachfolgenden doch davon aus, dass nur der vordere Bereich einen Gleitschuh 46 darstellt, der über einen Arm 54 mit der Schwenkwelle 48 verbunden ist bzw. zu dieser reicht. Der Gleitschuh 46 ist auch mit Blick auf Figur 2 so ausgebildet, dass er zwischen die Zinken 30 passt und sich im Extremfall an die Unterseite der Abstreifbleche 34 anlegen kann, ohne mit den Zinken 30 zu kollidieren. Andererseits wäre es auch möglich, außerhalb des Zinkenbewegungsbereichs breitere Platten oder dergleichen an der Unterseite der Gleitschuhe 46 anzubringen, die den Bodendruck minimieren, oder die Gleitschuhe 46 selbst plattenförmig auszubilden. Lösbar anbringbare Platten hätten zudem den Vorteil, dass sie bei Verschleiss oder Beschädigung leicht ausgetauscht werden könnten. In einer weiteren Ausführungsform können anstelle fester Gleitflächen auch Rollen, Räder oder dergleichen verwendet werden. Jeder Arm 54 erstreckt sich an dem dem Gleitschuh 46 gegenüberliegenden Ende über die Schwenkwelle 48 hinaus und bildet einen Kragarm 55, der wie eine Schere zu dem Arm 52 verläuft.

Die Schwenkwelle 48 ist vorzugsweise mit einem unrunden Profil versehen, z. B. sechskantig, und erstreckt sich vorzugsweise über die gesamte Breite der Höhenführungsvorrichtung 28. Alternativ könnte auch jeweils ein Rad 44 mit nur einem oder mehreren Gleitschuhen 46 verbunden sein. Die Schwenkwelle 48 ist an dem rückwärtigen unteren Eckbereich der Gutaufnahmevorrichtung 22 mittels der Lager 50 drehbar aufgenommen und auf nicht gezeigte Weise axial gesichert.

Zwischen dem Arm 54 des Gleitschuhs 46 und dem Rahmen 36 der Gutaufnahmevorrichtung 22 ist eine Feder 56 vorgesehen, die stets bestrebt ist, das Rad 44 und mit ihm den Schwenkarmzusammenbau 42 um die Drehachse der Schwenkwelle 48 nach unten zu schwenken, so dass insbesondere bei angehobener Gutaufnahmevorrichtung 22 die Gleitschuhe 46 nicht nach unten wegstehen und mit einem Hindernis kollidieren, ohne ausweichen zu können, während ein Auftreffen des sich dann unten befindlichen und nach oben beweglichen Rades 44 unschädlich bleibt.

Während die Feder 56 in der Zeichnung als Torsionsfeder dargestellt ist, kann auch eine Vielzahl anderer Federn verwendet werden, z. B. Blattfedern, Schraubendruck- oder Schraubenzugfedern, oder auch Gasspeicher und dergleichen. Die Feder 56 ist einenends mittels einer nicht näher gezeigten und bezeichneten Öse und Schraube auf der Schwenkwelle 48 gehalten und liegt anderenends unter Vorspannung an der rückwärtigen unteren Kante des Rahmens 36 an, was allerdings auch anders gestaltet werden könnte.

Die Lager 50 sind in üblicher Weise als Gleit-, Rollen- oder Kugellager ausgeführt, die in Lagerschalen an der Unterseite des Rahmens 36 befestigt werden.

Die Feder 56 bzw. mehrere Federn 56 sind insbesondere hilfreich, um neben den Drehmomenten um die Schwenkwelle 48 aufgrund des Gewichts der beteiligten Massen bei sehr unebenem Boden die Gleitschuhe 46 im Wesentlichen oben zu halten.

Die Arme 52 für die Räder 44 sind mehr oder weniger aus einem biegesteifen Flachstahl gebildet.

Die Arme 54 für die Gleitschuhe 46 sind den Armen 52 vergleichbar ausgebildet. Wenn die Arme 54 zugleich die Gleitschuhe 46 bilden, können sie wie in Figur 3 gezeigt, J-förmig ausgebildet werden, so dass sie mit der äußeren Biegung des "J" anstatt mit dessen Kante auf dem Boden entlang gleiten.

Die Arme 52 und 54 können sich unmittelbar nebeneinander oder auch seitlich zueinander beabstandet auf der Schwenkwelle 48 erstrecken. In einer anderen Ausführungsform können sie auch zusammengefasst und einteilig ausgebildet werden. In dem dargestellten Ausführungsbeispiel schließen ihre Längsachsen einen Winkel von ca. 140 Grad zwischen sich ein. Da der Arm 52 des Rades 44 beweglich auf der Schwenkwelle 48 gelagert ist, wird die relative Stellung zwischen den Armen 52, 54 mittels einer sehr starken, als Schraubendruckfeder ausgebildeten Feder 60 gewahrt, die einenends an dem Kragarm 55 und anderenends auf der Oberseite der Arms 52 angreifen können. Durch die Feder 60 erstreckt sich eine Schraube 62, die sowohl in dem Kragarm 55, als auch in dem Arm 52 gesichert ist und sowohl dazu dient, die Feder 60 an Ort und Stelle zu halten, als auch dazu, den Spreizwinkel zwischen den Armen 52, 54 auf einem Minimum zu halten. Folglich sorgen die Feder 60 einerseits und die Schraube 62 andererseits dafür, dass sich die beiden Arme 52, 54 innerhalb eines bestimmten Bereichs unter Vorspannungen gegeneinander verstellen können.

Auf der Oberseite des Arms 52 ist eine Vertiefung 66 vorgesehen, die einen zweiten Anschlag 68 an dem Rahmen 36 teilweise in sich aufnehmen kann, wenn der Schwenkarmzusammenbau 42 zu sehr entgegen der Uhrzeigerdrehrichtung schwenkt. Der zweite Anschlag kann als Schraube, Bolzen, Schweißteil oder dergleichen ausgebildet sein und starr oder verstellbar an dem Rahmen 36 angebracht werden. Die Vertiefung 66 und der zweite Anschlag 68 befinden sich auf einem Kreisbogen um den Mittelpunkt der Schwenkwelle 48

Nach alledem ergibt sich folgende Funktion:
Während des Betriebs nehmen die Gutaufnahmevorrichtung 22 und die Höhenführungsvorrichtung 28 die in Figur 3 gezeigte Stellung ein, in der die Aufnehmer 30 mit geringem Abstand über den Boden streichen und die Gleitschuhe 46, wie auch die Räder 44 den Boden berühren. Wird die Gutaufnahmevorrichtung 22 mit Blick auf Figur 3 nach links, d. h. vorwärts bewegt, und trifft ein Gleitschuh 46 auf ein Hindernis 64, bewegt sich die Gutaufnahmevorrichtung 22 nach oben. Es erfolgt daraufhin eine Schwenkbewegung des Schwenkarmzusammenbaus 42 um die Schwenkwelle 48 im Uhrzeigerdrehsinn, und da sich das Rad 44 auf dem Boden befindet, wird die Gutaufnahmevorrichtung 22 im Bereich der Schwenkwelle 48 angehoben. Sobald das Hindernis überwunden ist, senkt sich der Gleitschuh 46 und mit ihm die Gutaufnahmevorrichtung 22 wieder ab. In einer Ausführungsform, in der das Rad 44 zu dem Gleitschuh 46 seitlich versetzt ist, wird das Rad 44 nicht auch noch über das Hindernis 64 rollen und nicht erneut zu einem Anheben der Gutaufnahmevorrichtung 22 führen.

## Patentansprüche

1. Gutaufnahmevorrichtung (22) mit einer Höhenführungsvorrichtung (28) mit einem Schwenkarmzusammenbau (42), der am rückwärtigen Bereich der Gutaufnahmevorrichtung (22) vertikal schwenkbar gelagert ist und an dem der Gutaufnahmevorrichtung (22) abgelegenen Endbereich wenigstens ein Rad (44) und an dem der Gutaufnahmevorrichtung (22) zugelegenen Endbereich wenigstens einen Gleitschuh (46) trägt oder als ein solcher ausgebildet ist.

2. Gutaufnahmevorrichtung nach Anspruch 1, **dadurch gekennzeichnet, dass** der Gleitschuh (46) schmaler ist als der Abstand zwischen Aufnehmern (30) der Gutaufnahmevorrichtung (22).

3. Gutaufnahmevorrichtung nach Anspruch 1, **dadurch gekennzeichnet, dass** der Gleitschuh (46) plattenförmig ausgebildet ist und sich über mehrere Aufnehmer (30) der Gutaufnahmevorrichtung (22) erstreckt.

4. Gutaufnahmevorrichtung nach einem oder mehreren der vorherigen Ansprüche, **dadurch gekennzeichnet, dass** sich der Drehpunkt des Rades (44) im Wesentlichen vertikal unterhalb eines Lagers (40) der Gutaufnahmevorrichtung (22) zur Verbindung mit einer Landmaschine (10) befindet.

5. Gutaufnahmevorrichtung nach einem oder mehreren der vorherigen Ansprüche, **dadurch gekennzeichnet, dass** über die Breite der Gutaufnahmevorrichtung (22) vorzugsweise gleichmäßig verteilt mehrere Gleitschuhe (46) vorgesehen sind.

6. Gutaufnahmevorrichtung nach einem oder mehreren der vorherigen Ansprüche, **dadurch gekennzeichnet, dass** die Gleitschuhe (46) und die Räder (44) seitlich zueinander versetzt angeordnet sind.

7. Gutaufnahmevorrichtung nach einem oder mehreren der vorherigen Ansprüche, **dadurch gekennzeichnet, dass** an dem Schwenkarmzusammenbau (42) vorgesehene Arme (52, 54) für das oder die Räder (44) und den oder die Gleitschuhe (46) elastisch ausgebildet oder miteinander verbunden sind oder der Gleitschuh (46) oder das Rad (44) elastisch an dem jeweiligen Arm (52, 54) aufgehängt ist.

8. Gutaufnahmevorrichtung nach einem oder mehreren der vorherigen Ansprüche, **dadurch gekennzeichnet, dass** der Gleitschuh (46) endseitig gerundete oder gebogene Kanten aufweist.

9. Gutaufnahmevorrichtung nach einem oder mehreren der vorherigen Ansprüche, **dadurch gekennzeichnet, dass** der Schwenkarmzusammenbau (42) zu einer Bewegung um seine Schwenkwelle (48) vorgespannt ist.

10. Gutaufnahmevorrichtung nach einem oder mehreren der vorherigen Ansprüche, **dadurch gekennzeichnet, dass** die Bewegung des Schwenkarmzusammenbaus (42) mittels wenigstens eines Anschlags (58, 68) begrenzbar ist.

11. Höhenführungsvorrichtung (28) mit den Merkmalen eines oder mehrerer der vorherigen Ansprüche bestimmt zur Verwendung an einer Rundballenpresse, Rechteckballenpresse, Ladewagen, Feldhäcksler, Schwadaufnehmer.
